# FASCICULE DE BREVET EUROPEEN

(11) **EP 1 303 672 B1**
(45) Date de publication et mention de la délivrance du brevet: **18.02.2015**
(21) Numéro de dépôt: 01954089.7
(22) Date de dépôt: 12.07.2001
(51) Int. Cl.: E04C 2/04, E04B 1/94

(54) **PLAQUE DE PLATRE ET SA PREPARATION**
GIPSKARTONPLATTE UND IHRE HERSTELLUNG
GYPSUM PLASTER BASE BOARD AND PREPARATION THEREOF

(30) Priorité: 18.07.2000 FR 0009395
(43) Date de publication de la demande: 23.04.2003
(73) Titulaire: Siniat, 84000 Avignon (FR)
(72) Inventeur: LECLERCQ, Claude, F-84210 Pernes les Fontaines (FR)
(74) Mandataire: Pochart, François
(86) Numéro de dépôt international: PCT/FR2001/002268
(87) Numéro de publication internationale: WO 2002/006605

(56) Documents cités:
- EP-A- 0 755 903
- DE-A- 3 508 933
- US-A- 3 922 442
- US-A- 5 035 951

## Description

La présente invention concerne une plaque de plâtre notamment à résistance au feu fortement améliorée ainsi qu'un procédé pour la préparation de cette plaque de plâtre.

Il est bien connu d'utiliser des plaques de plâtre pour réaliser des cloisons, des habillages d'éléments verticaux ou inclinés ou pour réaliser des plafonds suspendus ou non.

Ces plaques sont généralement constituées d'une âme essentiellement en plâtre, recouverte sur chacune de ses faces par une feuille servant la fois d'armature et de parement et qui peut être constituée de carton ou d'un mat de fibres minérales.

La demande de brevet européen n° 0 470 914 de la Demanderesse a divulgué en 1992 une plaque de plâtre destinée à la protection contre l'incendie dont les faces sont recouvertes d'un matériau de renfort à base de fils et/ou de fibres en matière minérale et/ou réfractaire.

Le brevet américain n° 4 647 496 a pour objet un système d'isolation extérieure pour un immeuble, comprenant une surface de support en plâtre pourvue d'un mat de verre et un matériau adhésif ayant une surface intérieure sur laquelle adhère un matériau isolant qui est pour l'essentiel dépourvu de canaux le traversant, et une surface extérieure sur laquelle est disposé un matériau de finition extérieure. La surface de support en plâtre peut être une plaque de plâtre ayant un coeur en plâtre revêtu sur ses deux côtés d'un mat de verre poreux.

La demande de brevet européen n° EP-A-755903 a trait à une plaque de construction ayant une résistance élevée au feu, dont les deux faces sont recouvertes d'un voile en fibres de verre et qui est constituée d'un mélange à prise hydraulique d'un semihydrate α contenant de 0,2 à 0,5% en poids d'un retardateur et d'alun, selon un rapport en poids de 75 :25 à 40 :60. Les voiles en fibres de verre peuvent être revêtus sur leurs faces extérieures d'un prérevêtement mince constitué d'un mélange composé essentiellement d'un sulfate de calcium semi-hydrate β ou d'anhydrite et de petites quantités d'un liant organique. Ce prérevêtement permet une mise en oeuvre aisée et satisfaisante du procédé dans les installations habituelles de production de plaques de plâtre cartonnées. En outre, il réalise une étanchéisation des voiles en fibres de verre, de sorte qu'aucun matériau contenant de l'alun ne peut circuler depuis le coeur de la plaque jusqu'à la face extérieure du voile en fibres de verre.

Le document US-A-4,784,897 concerne la préparation d'un mat en fibres de verre pour plaques de plâtre enduit sur sa face extérieure d'une composition d'enduction comprenant du carbonate de calcium et un liant organique.

Le documents US-A-5,397,631 décrit des mats imperméables en fibres de verre pour plaques de plâtre enduits d'une composition comprenant une charge minérale calcaire et une résine.

Le document DE-A-3508933 décrit des mats non combustibles en fibres de verre enduits sur une face extérieure par une composition comprenant du calcaire et une résine organique.

La Demanderesse a poursuivi ses travaux dans le domaine des plaques de plâtre en vue, notamment, de réduire la libération des fibres de verre lors de l'utilisation de plaques à parement en mat de fibres de verre, et d'améliorer l'aspect de la surface des plaques, leur aptitude à la mise en peinture, ainsi que leurs performances de réaction au feu et de résistance au feu.

Elle a maintenant atteint ses objectifs en mettant au point une plaque de plâtre, notamment à résistance au feu améliorée, ayant un coeur à base de plâtre, étant munie sur l'une au moins de ces faces, d'un parement constitué d'un mat en fibres de verre, ce mat étant enduit, sur sa face extérieure, d'une composition d'enduction préparée par dilution d'un mélange composé de:
- 90 à 98% d'alumine hydratée ;
- 1 à 9% de résine vinylique ; et
- 0,1 à 1% de fluorure de carbone ou d'huile de silicone.

Enfin, un deuxième objet de l'invention est un procédé de préparation d'une plaque de plâtre comprenant au moins un mat en fibres de verre enduit tel qu'il vient d'être décrit.

Les plaques de plâtre selon l'invention présentent ainsi une état de surface meilleur que celui des plaques de plâtre de l'art antérieur.

Ainsi, on note immédiatement l'uniformité de la teinte du parement de la plaque ainsi que l'absence de marbrures en face apparente de la plaque.

De plus, le pouvoir calorifique supérieur des plaques selon l'invention est en général nettement inférieur à celui des plaques de l'art antérieur.

En outre, la température de fusion ou destruction du parement de plaque est repoussée de 700°C (art antérieur) à 1000°C (invention).

Par ailleurs, les fibres de verre des mats ne se détachent pas car elles sont bien collées.

Enfin, le comportement à la mise en peinture est satisfaisant : on ne décèle pratiquement pas de changement de couleur entre la plaque et le joint et la mise en peinture ne nécessite pas de préparation spéciale du support.

D'autres caractéristiques et avantages de l'invention vont maintenant être décrits en détail dans l'exposé qui suit.

### Plaque de plâtre

Par "plâtre", il faut entendre, dans le présent exposé, le produit résultant de la prise hydraulique et du durcissement d'un sulfate de calcium hydratable, c'est-à-dire un sulfate de calcium anhydre (anhydrite II ou III) ou un sulfate de calcium semi-hydraté (CaSO₄, ½H₂O) sous sa forme cristalline α ou β. Ces composés sont bien connus de l'homme du métier et sont généralement obtenus par cuisson d'un gypse.

Le coeur en plâtre comprend en général des fibres minérales et/ou réfractaires qui sont de préférence des fibres de verre. Elles peuvent être courtes (3 à 6 mm en moyenne) ou bien longues (10 à 24 mm en moyenne) ou de dimensions intermédiaires.

On utilise en particulier des fibres issues d'un verre de type E, qui peuvent se présenter sous deux formes, l'une appelée "roving" et désignant des brins de verre fournis en bobines et coupés avant introduction dans le circuit habituel de mélange du sulfate de calcium hydratable avec l'eau ou bien sous forme de brins précoupés qui sont dosés avant le mélange du sulfate de calcium hydratable avec l'eau.

On utilise de préférence des fibres ayant une longueur de 13 mm et un diamètre de 13 microns.

La fonction essentielle des fibres de verre est de conférer de la résistance mécanique à haute température, ce qui permet de conserver la cohésion du plâtre calciné.

Le coeur de la plaque de plâtre peut également comprendre un mélange d'additifs minéraux visant à améliorer la stabilité dimensionnelle et les performances thermiques de la plaque de plâtre.

Le coeur de la plaque de plâtre peut également comprendre un mélange d'additifs visant à améliorer la résistance à l'eau; des additifs d'hydrophobation et/ou hydrofugation sont appropriés. On peut citer ceux mentionnés dans le brevet US-P-5,220,762, savoir organohydrogénopolysiloxane.

### Mats en fibres de verre

Ils sont généralement fabriqués par cuisson d'un mélange de silice amorphe, de chaux, de feldspath, de silicate de soude, de bore, et/ou d'autres ingrédients, ce qui permet d'obtenir des galets qui sont ensuite refondus et étirés par un système d'enrouleur jusqu'à obtention de fils de diamètre de 10*µ* qui sont recoupés de façon à avoir une longueur de 12 mm.

La fabrication en continu du mat en fibres de verre repose sur un procédé dit "par voie humide", assez proche des techniques papetières et bien connu de l'homme du métier. Un mélange comportant environ 5% de fibres de verre, de l'eau et des additifs divers est déposé sur une table de formage filtrante par l'intermédiaire d'une "boîte à eau". Après ce préformage, le liant (résine vinylique, acrylique ou mélamine) est déposé sur le non tissé de verre. Le voile est ensuite séché à 140°C environ, pour évacuer l'eau résiduelle et réticuler le liant. La ligne de fabrication se termine par des dispositifs de bobinage et recoupe à différentes largeurs.

Diverses publications, notamment des demandes de brevet au nom de Schuller, enseignent cette technique.

Ce mat a pour fonction entre autres de limiter la pénétration de la composition de pâte de plâtre lors de la fabrication des plaques. Il est en général hydrophobé, et donc jour un rôle similaire à la feuille pelable en silicone selon le document DE-A-2008744.

Ce mat peut en outre recevoir un revêtement supplémentaire hydrophobe et/ou hydrofuge, selon une technique décrite par exemple dans US-P-5,397,631 et US-P-5,552,187. Ainsi, le mat selon l'invention peut recevoir un revêtement du type (i) émulsion cire/asphalte; (ii) polysiloxane; (iii) latex séché contenant une résine, notamment poly(vinylidène-co-polymère) ; (iv) en poids 15-35% de résine solide, 20-65% d'une charge et jusque 5% d'un additif choisi parmi pigment, épaississant, démoussant, dispersant, conservateur, ou un mélange. Le revêtement résultant peut être tel qu'aucune fibre du mat ne dépasse (la surface du revêtement étant lisse) et/ou tel que l'absorption de surface mesurée selon le test de Cobb modifié (décrit dans le brevet US-P-5,397,631 à la colonne 9, lignes 15 à 48) soit inférieure à 2,4g de préférence inférieure à 0,5g et/ou soit susceptible de former une liaison avec du ciment à base de Portland. Ce revêtement peut être obtenu notamment par applicatioon d'un latex et séchage.

### Composition d'enduction

### Charge minérale

Elle est choisie dans le groupe constitué par l'alumine hydratée, le kaolin blanc, les argiles et leurs mélanges.

On utilise avantageusement des argiles dont l'état de surface a été modifié par hydrofugation, par exemple au moyen de stéarates ou de titanates.

On utilise de préférence des charges blanches et fines, c'est-à-dire ayant une granulométrie inférieure à 40*µ*, en particulier inférieure à 20*µ*.

Comme charge, on met en oeuvre soit un mélange d'alumine hydratée et d'argile ayant un rapport massique alumine hydratée/argile compris entre 30/70 et 70/30, soit un mélange d'alumine hydratée et de kaolin ayant un rapport massique alumine hydratée/kaolin compris entre 30/70 et 70/30, soit de l'alumine pure.

### Liant

Comme liant organique, on peut utiliser un liant du type vinylique, comme une résine éthylène/acétate de vinyle.

On peut aussi citer à titre de liant de façon générale les copolymères éthylène/acétate de vinyle (EVA plastifiés ou non), éthylène/versatate de vinyle, acétate de vinyle/versatate de vinyle, polyacryliques, copolymères acétate de vinyle/acryliques, copolymères styrèniques/acryliques, les terpolymères acétate de vinyle/versatate de vinyle/acryliques, et leurs mélanges.

De préférence, on utilise un liant de type vinylique, peu sensible à la réhumidification (cette dernière entraînant en général des plis dans le mat de verre).

### Hydrofugeant

L'hydrofugeant peut être choisi dans le groupe constitué par les fluorures de carbone et les huiles de silicone.

Selon un mode de réalisation préféré de l'invention, la composition d'enduction comprend :
- de 85 à 99% d'une charge minérale qui est soit un mélange d'alumine hydratée et d'argile ayant un rapport massique alumine hydratée/argile compris entre 30/70 et 70/30, soit un mélange d'alumine hydratée et de kaolin ayant un rapport massique alumine hydratée/kaolin compris entre 30/70 et 70/30, soit de l'alumine hydratée pure ;
- de 1 à 10% d'un liant vinylique, par exemple un copolymère éthylène-vinyl acétate (EVA) ;
- de 0,1 à 1% de fluorure de carbone ou d'huile de silicone ;
- de l'eau, ou un autre solvant.

Particulièrement préférées sont les compositions d'enduction préparées par dilution d'un mélange composé de :
- 90 à 98% d'hydroxyde d'aluminium ;
- 1 à 9% de résine vinylique, par exemple de l'EVA ;
- 0,1 à 1% de fluorure de carbone ou d'huile de silicone.

### Procédé d'enduction selon l'invention

Selon l'invention, on applique, sur le mat en fibres de verre une composition d'enduction telle que définie ci-dessus.

L'enduction du mat en fibres de verre est réalisée sur une ligne adaptée avec les opérations de mélange d'une pâte liquide, dépôt de cette pâte sur le mat par un procédé classique d'encollage et séchage à température variable selon le type d'enduction. Cette enduction crée en général une dissymétrie dans le mat, le traitement étant opérant sur une partie de l'épaisseur, en général jusqu'à 30 à 70% de l'épaisseur du mat, en général environ 50%.

Le grammage d'enduction est de préférence compris entre 200 et 300 g/m².

A nouveau diverses publications, notamment des demandes de brevet au nom de Schuller, enseignent cette technique.

On a constaté qu'une enduction (par exemple à raison de 250 g/m²) avec une charge (par exemple une charge blanche ou très légèrement colorée), quelque soit sa nature, en association avec un liant organique (par exemple à raison de 5%), permet de réduire significativement la porosité et la perméabilité du mat de verre. Ceci a pour conséquence d'éviter toute traversée locale de plâtre, tout en assurant, du fait de la dissymétrie du mat de verre enduit, une liaison homogène entre le mat de verre et le coeur de la plaque de plâtre.

### Procédé de fabrication de plaques de plâtre selon l'invention

Enfin, l'invention a pour troisième objet un procédé de fabrication en continu de plaques de plâtre, comprenant essentiellement les étapes suivantes :
- préparation d'une pâte de plâtre par mélange des différents constituants de la composition avec de l'eau, dans un mélangeur ;
- dépôt de la pâte ainsi préparée sur au moins un mat de verre enduit, sur la face non enduite de ce mat, suivi du formage et de l'enrobage de la face supérieure de la pâte à l'aide d'un second matériau de renfort, préférentiellement un second mat de verre enduit ;
- le cas échéant, formage des bords de la plaque obtenue précédemment par moulage de la plaque fraîche sur des bandes profilées, ce formage consistant notamment à amincir les bords de la plaque ;
- prise hydraulique du sulfate de calcium hydratable sur une ligne de fabrication alors que le ruban de plaque de sulfate de calcium hydratable- chemine sur un tapis roulant ;
- découpage du ruban en fin de ligne, suivant des longueurs déterminées ; et
- séchage des plaques obtenues.

L'invention s'applique particulièrement bien aux plaques de plâtre dont la composition du coeur et la fabrication sont décrits dans la demande de brevet européen précitée n° EP-A-0470914.

### Composition de plâtre préférée.

L'invention s'applique particulièrement bien aux plaques de plâtre dont la composition du coeur est la suivante :
- de 55 à 92% de sulfate de calcium hydratable;
- de 0,1 à 5% de fibres minérales et/ou réfractaires ;
- de 3 à 25% d'un additif minéral ;
- de 1 à 5% de vermiculite non expansée ;
- de 3 à 15 % d'alumine hydratée.

Selon un mode de réalisation préféré de l'invention, on choisit la nature et la quantité de l'additif minéral de façon à ce que la composition pour plaque de plâtre contienne au maximum 2% de silice cristalline, et/ou au maximum 1% de silice cristalline alvéolaire, c'est-à-dire ayant des cristaux inférieurs à 5 microns. Une telle composition a alors l'avantage d'avoir une teneur en silice cristalline, notamment alvéolaire, conforme aux recommandations de l'International Agency for Research on Cancer, selon laquelle il convient de réduire au maximum l'usage de silice cristalline alvéolaire, car ce composé est présumé présenter une toxicité maximale.

Les fibres minérales et/ou réfractaires sont de préférence des fibres de verre. Elles peuvent être courtes (3 à 6 mm en moyenne) ou bien longues (10 à 24 mm en moyenne) ou de dimensions intermédiaires. De préférence, on utilise des fibres de verre ayant une longueur unique de 13 mm +/- 5 mm.

On utilise en particulier des fibres issues d'un verre de type E, qui peuvent se présenter sous deux formes, l'une appelée "roving" et désignant des brins de verre fournis en bobines et coupés avant introduction dans le circuit habituel de mélange du sulfate de calcium hydratable avec l'eau ou bien sous forme de brins précoupés qui sont dosés avant le mélange du sulfate de calcium hydratable avec l'eau.

On utilise de préférence des fibres ayant une longueur d'environ 13 mm (+/- 5 mm) et un diamètre d'environ 13 microns (+/- 5 *µ*m).

La fonction essentielle des fibres de verre est de conférer de la résistance mécanique à haute température, ce qui permet de conserver la cohésion du plâtre calciné.

Comme additif minéral, on peut utiliser de nombreuses argiles. Les avantages procurés par les argiles sont, d'une part, le fait qu'elles libèrent l'eau dont elles sont constituées (eau de constitution) lorsqu'elles sont portées à une température comprise entre 100 et 600°C et d'autre part, le fait qu'elles compensent le retrait au feu du plâtre grâce à leur capacité à s'exfolier.

De préférence, on choisit la nature et la quantité de l'additif minéral de façon à ce que la composition de plâtre contienne au maximum 2% de silice cristalline et/ou au maximum 1% de silice cristalline alvéolaire.

On utilise donc avantageusement un additif minéral comportant au plus 7,5% de silice cristalline alvéolaire.

Comme additif minéral, on peut utiliser un additif minéral comportant essentiellement un matériau argileux dont la quantité de silice cristalline est au plus égale à environ 15% en poids de l'additif minéral, et un complément minéral inerte, compatible avec le matériau argileux et dispersable dans le substrat de plâtre durci.

Par exemple, on peut utiliser un additif minéral comprenant comme matériau argileux du kaolin, de l'illite, du quartz et, comme complément minéral de la dolomie. On met en particulier en oeuvre un additif minéral ayant la composition suivante (en pourcentages massiques rapportés à la masse totale de additif minéral) :
- 25 % de kaolin ;
- 10 % d'illite ;
- 15 % de quartz ;
- 50% de dolomie.

La composition chimique calcinée de cet additif est la suivante (en %) :
- SiO₂ : 43
- TiO₂ : 1,1
- Al₂O₃ : 15
- Fe₂O₃ : 1,6
- K₂O : 1,2
- CaO : 23
- MgO : 14

Sa granulométrie est exprimée par un refus à 63 *µ*m inférieur à 15%.

Sa perte au feu à 900°C est de 26,5%.

La composition de plâtre préférée selon l'invention comprend de la vermiculite non expansée, qui est un silicate d'aluminium, de fer et de magnésium se présentant sous forme de paillettes qui s'expansent à une température supérieure à 200°C, ce qui permet de compenser le retrait du plâtre. En outre, la vermiculite non expansée améliore la résistance thermique du plâtre.

De préférence, on utilise une vermiculite non expansée micronisée c'est-à-dire dont tous les grains sont inférieurs à 1 mm. Ceci a l'avantage de rendre possible une meilleure répartition de la vermiculite au sein du plâtre et d'éviter une expansion brutale engendrant des désordres structurels.

L'alumine hydratée (ou trihydroxyde d'aluminium) est de préférence utilisée en granulométrie fine (diamètre médian de 10 microns environ). Elle a pour effet de donner lieu à une réaction endothermique complémentaire à celle du gypse, notamment par une teneur en eau de cristallisation de 35% environ, libérable entre 200 et 400°C. (le gypse contenant environ 20% d'eau libérable à environ 140°C).

La composition de plâtre préférée selon l'invention peut en outre éventuellement comprendre jusqu'à 4%, notamment de 1 à 4%, d'acide borique, car ce produit perd avantageusement son eau de constitution à partir de 100°C, ce qui contribue à la résistance au feu de la plaque de plâtre. D'autre part l'acide borique modifie la structure cristalline du sulfate de calcium hydraté, de façon favorable au niveau du retrait au feu.

La composition selon l'invention peut être préparée en mélangeant, pour 100 parties en poids de composition :
- de 55 à 92 parties en poids de sulfate de calcium hydratable;
- de 0,1 à 5 parties en poids de fibres minérales et/ou réfractaires ;
- de 3 à 25 parties en poids d'un additif minéral ;
- de 1 à 5 parties en poids de vermiculite non expansée ;
- de 3 à 15 parties en poids d'alumine hydratée.

La composition préférée selon l'invention présente les avantages suivants :
- la composition peut être aisément formulée sous la forme d'une pâte fluide qui est ensuite transformée, avantageusement en continu, en plaque de plâtre, dans des installations classiques utilisées pour ce type de fabrication ;
- elle constitue un protection efficace contre l'incendie ; ainsi des plaques selon l'invention, d'épaisseur de l'ordre de 12,5mm et de densité d'ordre 0,88g/cm³ garantissent une tenue au feu supérieure à 2 heures ;
- grâce à leur bonne stabilité dimensionelle, les plaques selon l'invention conservent après l'essai de tenue au feu un bon aspect général sans fissure profonde et présentent une tenue mécanique (ce comportement est important pour des applications en très haute protection incendie, tels que les conduits aérauliques de ventilation et désenfumage, où on demande une étanchéité aux gaz chauds sous pression élevée);
- les résultats des essais de réaction au feu des plaques de plâtre selon l'invention sont très bons : quand ces plaques sont soumises à l'action d'une source rayonnante et/ou d'un brûleur spécifique dans des conditions définies (pendant 20 minutes), susceptibles de provoquer l'inflammation des gaz dégagés et une propagation de la combustion, on n'a pas observé d'inflammation et la détérioration de ces plaques n'est que superficielle ; à l'issue de cet essai, les plaques de plâtre selon l'invention sont donc encore en mesure d'arrêter la propagation d'un incendie ;
- grâce à sa légèreté et à son aptitude à être ouvragée (découpée, clouée, vissée, agrafée, vissée/collée, etc.) elle est très facile à mettre en place ; avantageusement, elle comporte des bords amincis, avec lesquels on peut réaliser des joints fiables entre les plaques à l'aide d'enduits à joint pour plaque de plâtre, par exemple du type de ceux utilisés pour les plaques enrobées dans du carton, et de préférence, des enduits à joints résistants au feu ; également, les possibilités de finition des éléments de construction réalisés avec des plaques selon l'invention sont variées et sont notamment la peinture, le papier peint, etc. ;
- elle possède les caractéristiques d'usage exigées dans le domaine de la construction : telles que la raideur flexionnelle, la résistance mécanique aux chocs lourds, la résistance à l'humidité, et l'absence de fluage en présence d'humidité ou sous son propre poids lorsqu'elle est montée en plafond ;
- enfin, étant donné qu'elle peut être fabriquée selon un procédé simple et bien connu dans le domaine des plaque de plâtre et qu'en outre, les matières premières qui la constituent sont assez bon marché, la plaque de plâtre selon l'invention présente l'avantage d'être d'un coût de revient modéré.

De bonnes performances sont obtenues avec la composition suivante :
- 70 à 80% de sulfate de calcium hydratable semi-hydrate ;
- 1% de fibres de verre ;
- 10 à 15% de l'argile décrite ci-dessus, constituée de 25 % de kaolin, de 10 % d'illite, de 15 % de quartz et de 50% de dolomie ;
- 2 à 4% de vermiculite micronisée non expansée ;
- 6 à 10% d'alumine hydratée ; et
- 0 à 2% d'acide borique.

Bien entendu, sous réserve que les proportions attribuées à chacun des constituants essentiels soient respectées, on peut introduire dans la composition selon l'invention, à titre secondaire, des adjuvants utilisés usuellement pour faciliter la mise en oeuvre des autres constituants ou pour conférer à la composition des propriétés particulières supplémentaires. A titre d'exemples de tels adjuvants, on peut citer, les fluidifiants, les agents moussants, les accélérateurs de prise et les hydrofugeants.

### Conduit aéraulique.

L'invention permet d'obtenur des conduits aérauliques améliorés, à savoir un conduit de désenfumage (feu intérieur à l'élément) et un conduit de ventilation (feu extérieur à l'élément). Le mat formant le parement sera côté exposé au feu. La classement coupe-feu est en général de une heure dans les deux cas.

Ce système est basé sur un corps de conduit en 4 faces prédécoupées en atelier, et assemblées notamment par agrafage dans un manchon de raccordement lui-même également préparé en atelier. A titre d'exemple non-limitatif, on peut citer un conduit de désenfumage ou de ventilation simple parement (une face mat), dans un chassis comportant une structure en profilés acier sous laquelle est suspendu le conduit. La section intérieure des tronçons de conduit est de 600x400mm, sa longueur variable par exemple 1000mm. Le corps du tronçon du conduit est réalisé à partir de plaques selon l'invention de 25mm d'épaisseur assemblées en simple épaisseur. Les tronçons sont raccordés par des manchons en plaque selon l'invention, prédécoupées et assemblées; d'une longueur de 200mm et une section intérieure de 650x450mm, s'emboîtant autour des tronçons du conduit. Un enduit peut être utilisé si nécessaire pour parfaire l'étanchéité.

### Exemples

Les exemples suivants sont donnés à titre uniquement illustratif et n'ont aucun caractère limitatif.

L'alumine hydratée utilisée dans les exemples est du trihydrate d'alumine Al(OH)₃ dont les caractéristiques de l'hydrate sec sont les suivantes :
Blancheur : 92%
Humidité : 0,2%
Densité apparente : 0,8g/cm³
Granulométrie : d₅₀ = 10 *µ*m
Refus à 45 *µ*m : inférieur à 1%
Teneur en poids en Al₂O₃ : 65%
Teneur en poids en H₂O : 35%

En ce qui concerne les performances feu des plaques de plâtre, on distingue entre :
a) la réaction au feu qui s'intéresse au comportement des matériaux soumis à un feu localisé. Dans le cas d'une plaque de plâtre, le parement est l'élément prépondérant pour le classement ;
b) la résistance au feu qui traite du comportement des ouvrages sollicités par un feu pleinement développé ("post flash over situation"). Le coeur et le parement des plaques de plâtre contribuent à la performance de l'ouvrage. La contribution des parements à la performance de résistance au feu de la plaque de plate est limitée par la destruction ou fusion du mat en fibres de verre. Ceci s'applique autant au parement externe directement agressé par l'incendie que pour le parement au dos de la plaque qui contribue à la tenue mécanique à chaud.

### Exemple 1

On a préparé, selon la demande de brevet européen précitée n° EP-A-0470914, la composition suivante :
- 76 % de sulfate de calcium hydratable (issu de la cuisson industrielle de désulfogypse (FGD)) ;
- 1% de fibres de verre ;
- 10% d'alumine hydratée ;
- 9% de quartz ; et
- 4% de talc.

A l'aide de cette composition, on a réalisé des plaques de plâtre avec les parements suivants :
- plaque A (art antérieur) : mat de verre de 0,5 mm d'épaisseur renforcé par une grille de verre à mailles 3/1 et enduit à l'aide d'une composition organique (vinylique ou acrylique), le grammage total (mat + grille + enduction organique) étant de 140 g/m²;
- plaque B (art antérieur) : mat de verre de 0,85 mm d'épaisseur non enduit avec un grammage total de 110 g/m²;
- plaque C (selon l'invention) : mat de verre de 0,95 mm d'épaisseur enduit à l'aide d'une composition d'enduction comprenant de l'alumine hydratée (environ 94,5%), une résine acrylique (environ 5%), du fluorure de carbone (environ 0,3%) appliquée à raison de 250 g/m².

### Exemple 2

On a mesuré certaines propriétés des plaques A à C. Les résultats obtenus sont regroupés dans le tableau suivant :

| | PLAQUES | | |
|---|---|---|---|
| PROPRIETES | A | B | C (invention) |
| Porosité à l'air (l/m².s) | 550 | 1600 | 200 |
| Perméabilité à la pâte de plâtre (q) | < 1200 | < 700 | < 300 |
| Résistance à la traction | | | |
| SL (N/50 mm) | > 730 | 550 | 650 |
| SN (N/50 mm) | > 350 | 330 | 500 |
| Perte au feu à 650°C. (%) | 50 | 21 | 31 |
| Pouvoir calorifique supérieur (PCS) | | | |
| - massique (MJ :kg) | 12 | 4 | 2 |
| - surfacique (MJ/m²) | 1,7 | 0,5 | 0,65 |
| Comportement à très haute température | Fusion à 700°C | fusion à 800°C | Ramollissement à 900°C, pulvérulent à 1000°C |

Les normes actuelles imposent, pour un classement dit "Euroclasse", que le PCS massique ou le PCS surfacique soit inférieur ou égal à 2.

On constate que seule la plaque C présente à la fois un PCS massique et un PCS surfacique inférieurs ou égaux à 2.

### Exemple 3

A partir de la composition préparée à l'exemple 1, on prépare la plaque D selon l'art antérieur et les plaques E à K selon l'invention, dont les caractéristiques sont données dans le tableau suivant :

| | PLAQUES | | | | | | | |
|---|---|---|---|---|---|---|---|---|
| | D | E | F | G | H | I | J | K |
| Enduction ; | - | | | | | | | |
| - % d'alumine | | 95 | 95 | 95 | 94,9 | 94,85 | 94,7 | 94,8 |
| - % de résine EVA | | 5 | 5 | 5 | 5 | 0,2 | 5 | 5 |
| - % de fluorure de carbone | | - | | | 0,1 | | 0,3 | 0,2 |
| | | | | | | 90 | | 60 à |
| - % d'eau (*) | | 90 | 90 | 90 | 90 | | 90 | 80 |
| Grammage total (g/m²) | 103,9 | 256,9 | 311,5 | 311,0 | 366,0 | 370 | 363 | 338 |
| Epaisseur du parement (mm) | 0,795 | 0,90 | 0,94 | 0,94 | 0,87 | 0,87 | 0,92 | 0,94 |

| | | | | | | | | |
|---|---|---|---|---|---|---|---|---|
| (*) : il s'agit du % d'eau dans le mélange matières sèches (alumine/résine/éventuellement hydrofugeant) et eau. | | | | | | | | |

### Exemple 4

On a mesuré certaines des propriétés des plaques D à K. Les résultats obtenus sont regroupés dans le tableau suivant :

| | PLAQUES | | | | | | | |
|---|---|---|---|---|---|---|---|---|
| | D | E | F | G | H | I | J | K |
| Absorption goutte d'eau (en sec) - mat | - | - | - | | | | | - |
| | | | | 18 | 130 | > 1000 | > 1000 | |
| - plaque | | | | 10 | 105 | | | |
| Brillance 2 passes peinture à 85° (*) | 0,7 | 1,00 | 1,6 | 3,2 | 2,0 | 2,4 | 4,6 | - |
| PCS | | | | | - | - | - | |
| - massique (MJ/kg) | 4,05 | 2,95 | 2,90 | 2,0 | | | | 2,0 |
| - surfacique (MJ/m²) | 0,421 | 0,756 | 0,903 | 0,622 | | | | 0,676 |
| Perte au feu (%) | | | | | | | | |
| - à 650°C | 21,3 | 30,2 | 30,7 | 31,5 | | | | 31,5 |
| - à 1000 °C | 22,1 | | | 32,9 | | | | |
| Perte au feu à 650°C (estimation organique) | 21,3 | 11,6 | 10,3 | 9,9 | | | | |
| Obervations après perte au feu | | | | | | | | |
| - à 700°C | RAS | | | RAS | | | | RAS |
| - à 800°C | Début fusion | | | Fripage | | | | Fripage |
| - à 900°C | rétraction et fusion | | | Fripage et ramol. | | | | Fripage et ramol. |
| - à 1000°C | Vitrification | | | Pulvérulent | | | | Pulvérulent |

| | | | | | | | | |
|---|---|---|---|---|---|---|---|---|
| * : brillance sous un faisceau lumineux incliné à 85° | | | | | | | | |

On voit donc que la protection conférée par l'enduction permet d'augmenter la température de fusion du mat en fibres de verre et de retarder sa destruction. Ainsi, (cf. plaques G et K par exemple) une enduction à base d'alumine hydratée permet de retarder le ramollissement du mat de verre jusqu'à 900°C.

Lors de ces essais de résistance au feu sur ouvrage, le délaminage du mat de verre enduit à l'alumine hydratée a ainsi été observé à partir de 50 miutes, ce qui correspond à une température normalisée du four de 920°C.

Par ailleurs, l'incorporation de l'hydrofugeant a pour effet d'augmenter les temps d'absorption d'une goutte d'eau (voir plaques H, I et J).

### Exemple 5

A partir de la composition préparée à l'exemple 1, on prépare les plaques L à Q dont les caractéristiques sont données dans le tableau suivant :

| | PLAQUES | | | | | |
|---|---|---|---|---|---|---|
| | L | M | N | O** | P** | Q |
| Enduction : | | | | | | |
| -% d'alumine | 95 | 94,5 | 94 | 47,5 | | 47,5 |
| -% de calcaire | | | | 47 | | |
| -% d'argile | | | | | 94,5 | 47 |
| - % d'EVA | 5 | 5 | 5 | 5 | 5 | 5 |
| - % de silicone | | 0,5 | 1,0 | 0,5 | 0,5 | 0,5 |
| - % d'eau (*) | | | | | | |
| | 90 | 90 | 90 | 90 | 90 | 90 |
| Grammage total (g/m²) | 350 | 350 | 350 | 350 | 350 | 350 |

| | | | | | | |
|---|---|---|---|---|---|---|
| (*) : il s'agit du % d'eau dans le mélange matières sèches (alumine/résine/éventuellement hydrofugeant) et eau. ** :pas selon l'invention | | | | | | |

### Exemple 6

On a mesuré certaines des propriétés des plaques L à Q. Les résultats obtenus sont regroupés dans le tableau suivant :

| | PLAQUES | | | | | |
|---|---|---|---|---|---|---|
| | L | M | N | O | P | Q |
| Absorption goutte d'eau | | | | | | |
| (en sec)- mat | 20 | 50 | 70 | 100 | 360 | 240 |
| - plaque | 1 | 33 | 44 | 45 | 20 | 20 |
| Brillance 2 passes peinture à 85° (**) | 2,7 | 2,00 | 1,2 | 2,0 | 4,8 | 4,0 |
| PCS | | | | | | |
| - massique (MJ/kg) | | | | | 1,65 | |
| - surfacique (MJ/m²) | | | | | 0,495 | |
| Perte au feu (%) | | | | | | |
| - à 650°C | | | | | | |
| - à 1000 °C | | 32,9 | | 36,4 | 27,2 | 31,5 |
| Obervations après perte au feu | | | | | | |
| - à 700°C | | | | | | |
| - à 800°C | | | | | | |
| - à 900°C | | | | | | |
| - à 1000°C | | Non vitrifié Très pulvérulent | | Non vitrifié Très pulvérulent | Non vitrifié Bonne cohésion | Non vitrifié Bonne cohésion |

| | | | | | | |
|---|---|---|---|---|---|---|
| (*) : brillance sous un faisceau lumineux incliné à 85° | | | | | | |

On observe à nouveau que l'incorporation de l'hydrofugeant augmente les temps d'absorption d'une goutte d'eau (voir plaques M à Q par rapport à la plaque L).

### Exemple 7

A partir de la composition préparée à l'exemple 1, on prépare les plaques R à W dont les caractéristiques sont données dans le tableau suivant :

| | PLAQUES | | | | | |
|---|---|---|---|---|---|---|
| | R | S | T** | U** | V** | W** |
| Enduction : | | | | | | |
| -% d'alumine | 47,5 | 47,5 | | | | |
| -% de calcaire | | | | | | 94,5 |
| -% de kaolin | 47 | 47 | 94 | 94 | 94 | |
| -% d'argile | | | | | | |
| - % d'EVA | 5 | 5 | 5 | 5 | 5 | 5 |
| - % de silicone | 0,5 | 0,5 | 0,5 | 1,0 | 0,5 | 0,5 |
| Grammage total (g/m²) | 350 | 350 | 350 | 500 | 350 | 350 |

| | | | | | | |
|---|---|---|---|---|---|---|
| ** Pas selon l'invention | | | | | | |

### Exemple 8

On a mesuré certaines des propriétés des plaques R à W. Les résultats obtenus sont regroupés dans le tableau suivant :

| | PLAQUES | | | | | |
|---|---|---|---|---|---|---|
| | R | S | T | U | V | W |
| Absorption goutte d'eau | | | | | | |
| (en sec) - mat | 60 | 75 | 95 | 155 | 150 | 540 |
| - plaque | 20 | 40 | 35 | 55 | 25 | 340 |
| Brillance 2 passes peinture à 85°C (*) | 2,3 | 2,5 | 3,2 | 11,5 | 2,7 | 2,1 |
| PCS | | | | | | |
| - massique (MJ/kg) | 1,65 | | 1,65 | | | |
| - surfacique (MJ/m²) | 0,79 | | 0,74 | | | |
| Perte au feu (%) | | | | | | |
| - à 650°C | | | | | | |
| - à 1000 °C | 25,6 | 23,8 | 17,5 | 17,2 | 16,9 | 36,9 |
| Obervations après perte au feu | | | | | | |
| - à 700°C | | | | | | |
| - à 800°C | | | | | | |
| - à 900°C | | | | | | |
| - à 1000°C | Non vitrifié Bonne cohésion | Non vitrifié Bonne cohésion | Non vitrifié Bonne cohésion | Non vitrifié Bonne cohésion | Non vitrifié Bonne cohésion | pulvérulent |

| | | | | | | |
|---|---|---|---|---|---|---|
| (*) : brillance sous un faisceau lumineux incliné â 85° | | | | | | |

### Exemple 9

A partir de la composition préparée à l'exemple 1, on prépare les plaques X, Y, Z, AA, BB, CC, DD et EE dont les caractéristiques sont données dans le tableau suivant :

| | PLAQUES | | | | | | | |
|---|---|---|---|---|---|---|---|---|
| | X** | Y** | Z** | AA** | BB** | CC** | DD | EE** |
| Enduction : | | | | | | | | |
| -% d'alumine | | | | | | | 47,5 | |
| -% de calcaire | | | | | | | | 47,5 |
| -% d'argile (1) | 95 | 94,5 | | | | | | |
| -% d'argile (2) | | | 94 | 97 | 90 | 89,5 | 47 | 47 |
| -% d'EVA | 5 | 5 | 5 | 2,5 | | 10 | | |
| -% de silicate de soude | | | | | 10 | 0,5 | 5 | 5 |
| - % de silicone | | 0,5 | 1,0 | 0,5 | | | 0,5 | 0,5 |
| Grammage total théorique (g/m²) | 350 | 350 | 350 | 500 | 350 | 350 | 350 | 350 |

| | | | | | | | | |
|---|---|---|---|---|---|---|---|---|
| ** Pas selon l'invention (1) : argile hydrophobée par un stéarate (2) : argile hydrophobée par un titanate | | | | | | | | |

### Exemple 10

On a mesuré certaines des propriétés des plaques X à EE. Les résultats obtenus sont regroupés dans le tableau suivant :

| | PLAQUES | | | | | | | |
|---|---|---|---|---|---|---|---|---|
| | X | Y | Z | AA | BB | CC | DD | EE |
| Absorption goutte d'eau | | | | | | | | |
| (en sec)- mat | 360 | 420 | 20 | 13 | 5 | 480 | 390 | 180 |
| - plaque | 120 | 420 | 95 | 75 | 10 | 120 | 35 | 180 |
| Brillance 2 passes peinture à 85° (*) | 10,8 | 18,8 | 2,8 | 6,2 | 4,5 | 2,1 | 11,2 | 7,6 |
| PCS | | | | | | | | |
| - massique (MJ/kg) | | 3,15 | 2,10 | 2,95 | 1,45 | 2,70 | 2,50 | 3,15 |
| - surfacique (MJ/m²) | | 1,10 | 0,67 | 0,80 | 0,73 | 1,13 | 0,90 | 0,98 |
| Perte au feu (%) | | | | | | | | |
| - à 700°C | | | 12,8 | 13,3 | 8,8 | 10,0 | 20,6 | 19,0 |
| - à 1000 °C | 12,7 | 13,9 | 13,9 | 14,1 | 9,1 | 11,4 | 21,7 | 26,3 |
| Observations après perte au feu | | | | | | | | |
| - à 700°C | | | RAS | RAS | verdâtre côté non enduit | Verdâtre côté non enduit | RAS | RAS |
| - à 800°C | | | RAS | Léger ramollissement | Légèrement rosâtre | Légèrement rosâtre | Tuilage | Tuilage |
| - à 900°C | | | Rosâtre, Léger ramoll-issement | Rosâtre, léger tuilage | Légèrement rosâtre | Légèrement rosâtre | Tuilage | Léger croûtage côté non enduit Très |
| - à 1000°C | Non vitrifié Bonne cohésion | Non vitrifié Assez bonne cohésion | | Tuilage, bonne cohésion | Tuilage, bonne cohésion | Tuilage, bonne cohésion | Tuilage, rosâtre, bonne cohésion | pulvérulent |

| | | | | | | | | |
|---|---|---|---|---|---|---|---|---|
| (*) : brillance sous un faisceau lumineux incliné à 85° | | | | | | | | |

### Exemple 11

On a mesuré le comportement à la mise en peinture de 4 groupes de deux plaques identiques unies par un enduit de jointoiement commercialisée sous l'appellation Pregylys 45 par la Demanderesse.

Les plaques du groupe 1 étaient des plaques de plâtre ayant la composition donnée dans l'exemple 1 ayant un mat de verre revêtu par une composition d'enduction Pregylys 45.

Les plaques du groupe 2 étaient des plaques de plâtre ayant la composition donnée dans l'exemple 1 ayant un mat de verre revêtu par de l'alumine.

Les plaques du groupe 3 étaient des plaques de plâtre ayant la composition donnée dans l'exemple 1 ayant un mat de verre non revêtu.

Les plaques du groupe 4 étaient des plaques de plâtre de l'art antérieur ayant un mat de verre renforcé par une grille de verre et sans enduction minérale.

On a observé la couleur des plaques et des joints avant l'application de la peinture et après l'application de deux couches d'une peinture acrylique de couleur blanc satiné.

Les résultats sont consignés dans le tableau suivant :

| | Groupe de plaques | | | |
|---|---|---|---|---|
| | 1 | 2 | 3 | 4 |
| Avant application de la peinture | Couleur blanche avec de légères nuances par endroits | Couleur blanche uniforme | Couleur blanche avec quelques taches sur le mat | Couleur blanche avec quelques taches sur le mat |
| Après application de la peinture | Le joint n'est pas apparent sous lumière perpendiculaire | Le joint n'est pas apparent sous lumière perpendiculaire | Le joint est apparent sous lumière perpendiculaire | Le joint est légèrement apparent sous lumière perpendiculaire |
| | Le joint est apparent sous lumière oblique | Le joint est apparent sous lumière oblique | | |
| | Pas de différence de rugosité | Pas de différence de rugosité | Différence de rugosité | Différence de rugosité |
| | Brillance du joint : 12,9 | Brillance du joint : 12,7 | Brillance du joint : 14,4 | Brillance du joint : 12,4 |
| | Brillance des plaques : 7,7 | Brillance des plaques : 6,5 | Brillance des plaques : 2,6 | Brillance des plaques : 4,3 |

On constate que la brillance passe de 2,6 pour les témoins sans enduit (plaques du groupe 3) à 6,5 (plaques du groupe 2).

## Revendications

1. Plaque de plâtre, ayant un coeur à base de plâtre, étant munie sur l'une au moins de ses faces, d'un parement constitué d'un mat en fibres de verre, ce mat étant enduit, sur sa face extérieure, d'une composition d'enduction et **caractérisée en ce que** son mat a été enduit à l'aide d'une composition d'enduction préparée par dilution d'un mélange composé de:
- 90 à 98% d'alumine hydratée;
- 1 à 9% de résine vinylique; et
- 0,1 à 1% de fluorure de carbone ou d'huile de silicone.

2. Plaque de plâtre selon la revendication 1 caractérisée en que l'argile est hydrophobée.

3. Plaque de plâtre selon la revendication 1 ou 2, **caractérisée en ce que** la résine vinylique est une résine éthylène-vinyl acetate (EVA).

4. Plaque de plâtre selon l'une des revendications précédentes, **caractérisée en ce que** la composition d'enduction pénètre jusqu'ä 30 à 70% de l'épaisseur du mat de verre.

5. Plaque de plâtre selon l'une des revendications précédentes, **caractérisée en ce que** son grammage d'enduction est compris entre 200 et 300 g/m².

6. Plaque de plâtre selon l'une des revendications précédentes, présentant en outre un revêtement hydrophobe et/ou hydrofuge sur au moins une face du mat.

7. Plaque de plâtre selon la revendication 6, **caractérisée en ce que** le revêtement est tel qu'aucune fibre du mat ne dépasse, la surface du revêtement étant lisse et/ou est tel que l'absorption de surface mesurée selon le test de Cobb modifie soit inférieure à 2,4g de préférence inférieure à 0,5g et/ou est susceptible de former une liaison avec du ciment à base de Portland.

8. Mat en fibres de verre enduit par une composition d'enduction préparée par dilution d'un mélange composé de:
- 90 à 98% d'alumine hydratée;
- 1 à 9% de résine vinylique; et
- 0,1 à 1% de fluorure de carbone ou d'huile de silicone.

9. Mat en fibres de verre selon la revendication 8, **caractérisé en ce que** la résine vinylique est une résine éthylène-vinyl acetate (EVA).

10. Procédé de préparation d'une plaque de plâtre selon l'une des revendications 1 à 7, comprenant essentiellement les étapes suivantes :
- préparation d'une pâte de plâtre par mélange des différents constituants de la composition avec de l'eau, dans un mélangeur:
- dépôt de la pâte ainsi préparée sur au moins un mat en fibres de verre enduit comprenant une charge minérale selon l'une des revendications 1 à 7 sur la face non enduite de ce mat, suivi du formage et de l'enrobage de la face supérieure de la pâte ä l'aide d'un second matériau de renfort, préférentiellement un second mat de verre enduit ;
- le cas échéant, formage des bords de la plaque obtenue précédemment par moulage de la plaque fraiche sur des bandes profilées, ce formage consistant notamment à amincir les bords de la plaque;
- prise hydraulique du sulfate de calcium hydratable sur une ligne de fabrication alors que Je ruban de plaque de sulfate de calcium hydratable chemine sur un tapis roulant ;
- découpage du ruban en fin de ligne, suivant des longueurs déterminées ; et
- séchage des plaques obtenues.

11. Conduit aéraulique comprenant une plaque de plâtre selon l'une quelconque des revendications 1 à 7.

12. Conduit selon la revendication 9 qui est un conduit de désenfumage ou un conduit de ventilation

## Patentansprüche

1. Gipsplatte mit einem Kern auf der Basis von Gips, die auf mindestens einer ihrer Seiten mit einer Verkleidung ausgestattet ist, die aus einer Glasfasermatte besteht, wobei diese Matte auf ihrer Außenseite mit einer Beschichtungsmischung beschichtet ist und **dadurch gekennzeichnet, dass** ihre Matte mit Hilfe einer Beschichtungszusammensetzung beschichtet ist, die durch Verdünnung eines Gemischs hergestellt ist, das sich zusammensetzt aus:
- 90 bis 98 % Aluminiumhydroxid,
- 1 bis 9 % Vinylharz und
- 0,1 bis 1 % Fluorcarbon oder Silikonöl.

2. Gipsplatte nach Anspruch 1, **dadurch gekennzeichnet, dass** der Ton hydrophobiert ist.

3. Gipsplatte nach Anspruch 1 oder 2, **dadurch gekennzeichnet, dass** das Vinylharz ein Etyhlenvinylacetatharz (EVA) ist.

4. Gipsplatte nach einem der vorangehenden Ansprüche, **dadurch gekennzeichnet, dass** die Beschichtungszusammensetzung 30 bis 70 % in die Dicke der Glasfasermatte eindringt.

5. Gipsplatte nach einem der vorangehenden Ansprüche, **dadurch gekennzeichnet, dass** ihr Beschichtungs-Flächengewicht zwischen 200 und 300 g/m² inklusive ist.

6. Gipsplatte nach einem der vorangehenden Ansprüche, die ferner einen hydrophoben und/oder wasserabweisenden Überzug auf mindestens einer Seite der Matte aufweist.

7. Gipsplatte nach Anspruch 6, **dadurch gekennzeichnet, dass** die Verkleidung derart ist, dass keine Faser der Matte übersteht, wobei die Oberfläche der Verkleidung glatt ist und/oder derart ist, dass die Oberflächenabsorption, gemessen gemäß modifiziertem Cobb-Test, entweder kleiner als 2,4 g, vorzugsweise kleiner als 0,5 g, ist und/oder imstande ist, eine Verbindung mit Zement auf Portlandbasis zu bilden.

8. Glasfasermatte, die mit einer Beschichtungszusammensetzung beschichtet ist, die durch Verdünnung eines Gemischs hergestellt ist, das sich zusammensetzt aus:
- 90 bis 98 % Aluminiumhydroxid,
- 1 bis 9 % Vinylharz und
- 0,1 bis 1 % Fluorcarbon oder Silikonöl.

9. Glasfasermatte nach Anspruch 8, **dadurch gekennzeichnet, dass** das Vinylharz ein Etyhlenvinylacetatharz (EVA) ist.

10. Herstellungsverfahren einer Gipsplatte nach einem der Ansprüche 1 bis 7, das im Wesentlichen die folgenden Schritte umfasst:
- Herstellen einer Gipsmasse durch Mischen der verschiedenen Bestandteile der Zusammensetzung mit Wasser in einem Mischer,
- Aufbringen der derart hergestellten Masse auf mindestens eine beschichtete Glasfasermatte, die eine mineralische Charge nach einem der Ansprüche 1 bis 7 umfasst, auf die nicht beschichtete Seite dieser Matte, gefolgt von der Formung und der Umhüllung der oberen Seite der Masse mit einem zweiten Verstärkungsmaterial, vorzugsweise einer zweiten beschichteten Glasfasermatte,
- ggf. Formen der Ränder der zuvor hergestellten Platte durch Formen der frischen Platte auf Profilbändern, wobei diese Formung insbesondere in einer Verschlankung der Ränder der Platte besteht,
- hydraulische Bindung des hydrierbaren Kalziumsulfats auf einer Fabrikationslinie, wogegen der hydrierbare Kalziumsulfatplattenstreifen auf einem Förderband läuft,
- Schneiden des Streifens am Ende der Linie gemäß vorher bestimmten Längen und
- Trocknen der hergestellten Platten.

11. Luftleitung, die eine Gipsplatte nach einem der Ansprüche 1 bis 7 umfasst.

12. Leitung nach Anspruch 9, die eine Entrauchungsleitung oder eine Belüftungsleitung ist.

## Claims

1. A plasterboard, having a core based on plaster, being provided on at least one of its faces with facer consisting of a glass fiber mat, this mat being coated on its outer face with a coating composition and **characterized in that** its mat was coated by means of a coating composition prepared by dilution of a mixture consisting of:
- 90 to 98% of alumina hydrate;
- 1 to 9% of vinyl resin; and
- 0.1 to 1% of carbon fluoride or silicone oil.

2. The plasterboard according to claim 1, **characterized in that** the clay is hydrophobicized.

3. The plasterboard according to claim 1 or 2, **characterized in that** the vinyl resin is an ethylene-vinyl acetate (EVA) resin.

4. The plasterboard according to one of the preceding claims, **characterized in that** the coating composition penetrates as far as 30 to 70% of the thickness of the glass mat.

5. The plasterboard according to one of the preceding claims, **characterized in that** its coating base weight is comprised between 200 and 300 g/m².

6. The plasterboard according to one of the preceding claims, further having a hydrophobic and/or water-repellent coating on at least one face of the mat.

7. The plasterboard according to claim 6, **characterized in that** the coating is such that no fiber of the mat juts out, the surface of the coating being smooth and/or is such that the surface absorption measured according to the modified Cobb test is less than 2.4 g, preferably less than 0.5 g and/or may form a bond with the Portland based cement.

8. A glass fiber mat coated with a coating composition prepared by diluting a mixture consisting of:
- 90 to 98% of alumina hydrate;
- 1 to 9% of vinyl resin; and
- 0.1 to 1% of carbon fluoride or silicone oil.

9. The glass fiber mat according to claim 8, **characterized in that** the vinyl resin is an ethylene-vinyl acetate (EVA) resin.

10. A method for preparing a plasterboard according to one of claims 1 to 7, essentially comprising the following steps:
- preparing a plaster paste by mixing the different constituents of the composition with water in a mixer:
- depositing the thereby prepared paste on at least one coated glass fiber mat comprising a mineral filler according to one of claims 1 to 7 on the non-coated face of this mat, followed by forming and coating of the upper face of the paste by means of a second reinforcing material, preferentially a second coated glass fiber mat;
- if necessary, forming edges of the board previously obtained by molding of the fresh board on profiled strips, this forming notably consisting of thinning the edges of the board;
- hydraulic setting of the hydratable calcium sulfate, on a production line while the strip of hydratable calcium sulfate board runs on a conveyor belt;
- cutting out the strip at the end of the line, according to determined lengths; and
- drying of the obtained boards.

11. An air duct comprising a plasterboard according to any of claims 1 to 7.

12. The duct according to claim 9, which is a smoke extraction duct or a ventilation duct.
